(19) Europäisches Patentamt
European Patent Office
Office européen des brevets

(11) **EP 2 623 774 A2**

(12) **EUROPEAN PATENT APPLICATION**
published in accordance with Art. 153(4) EPC

(43) Date of publication:
**07.08.2013 Bulletin 2013/32**

(51) Int Cl.:
*F03D 3/02* (2006.01)      *F03D 3/06* (2006.01)
*F03D 11/00* (2006.01)

(21) Application number: **11829595.5**

(22) Date of filing: **29.09.2011**

(86) International application number:
**PCT/KR2011/007191**

(87) International publication number:
**WO 2012/044089 (05.04.2012 Gazette 2012/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2010   KR 20100128480
30.09.2010   KR 20100095463**

(71) Applicants:
• **Jung, Ki-Han**
  **Ulsan 680-845 (KR)**
• **Lee, Seung-Ho**
  **Ulsan 683-701 (KR)**
• **Ehim, Jong-Bin**
  **Gyeongbuk 790-723 (KR)**

(72) Inventors:
• **Jung, Ki-Han**
  **Ulsan 680-845 (KR)**
• **Lee, Seung-Ho**
  **Ulsan 683-701 (KR)**
• **Ehim, Jong-Bin**
  **Gyeongbuk 790-723 (KR)**

(74) Representative: **Taor, Simon Edward William et al**
**Venner Shipley LLP
200 Aldersgate
London EC1A 4HD (GB)**

(54) **VERTICAL SHAFT TURBINE AND BIDIRECTIONAL STACK TYPE VERTICAL SHAFT TURBINE PROVIDED WITH SAME**

(57) The present invention relates to a vertical shaft turbine which can obtain effective energy under conditions of low wind speed and low RPM, and a bidirectional stack type vertical shaft turbine having the same. The vertical shaft turbine includes a multi-blade unit, an arm connected to the multi-blade unit, a rotating shaft connected to the arm, and a support supporting the rotating shaft. The multi-blade unit includes a cassette connected to the arm, a centrifugal rotating shaft coupled to the cassette so as to be rotatable, a first blade coupled to the centrifugal rotating shaft so as to be rotatable, a centrifugal force responding device coupled to the first blade, and a second blade coupled to the cassette. When the rotating shaft is rotated, the first blade is rotated around the centrifugal rotating shaft by force transmitted from the centrifugal force responding device in response to centrifugal force.

[Fig. 9]

EP 2 623 774 A2

# Description

The present invention relates, in general, to vertical shaft turbines which can generate an effective amount of energy under conditions of low wind speed and low RPM and, more particularly, to a vertical shaft turbine which is provided with a turbine blade that can form multiple angles of attack, thus enhancing efficiency of power generation, and a bidirectional stack type vertical shaft turbine having the same.

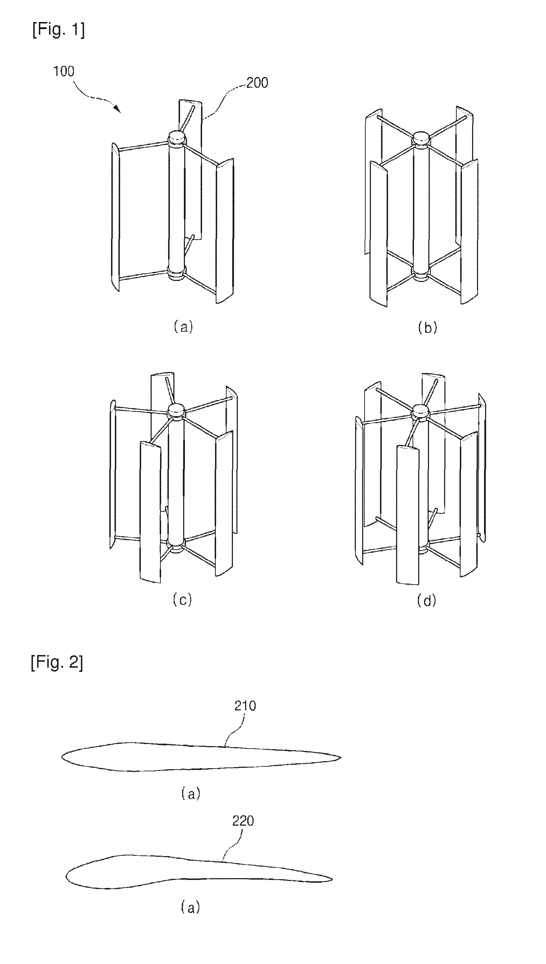

Generally, as shown in Figs. 1a through 1d, a vertical shaft turbine 100 includes a plurality of blades, e.g., three, four, five or six blades, which are arranged at positions spaced apart from each other at regular angular intervals. Typically, each blade of the turbine has a single blade structure.

In a typical turbine, two or more lift type blades, each of which has a single blade structure, are arranged around a rotating shaft at regular angular intervals. For example, a three-blade type vertical shaft turbine refers to a turbine in which three blades are arranged at regular angular intervals of 120°.

Blades for wind power turbines are classified into a drag type blade and a lift type blade. A turbine including drag type blades is known as a Savonius type turbine. A vertical shaft turbine including lift type blades is known as a Darrieus type turbine.

In terms of the rotating force of a turbine, lift is more important than drag. Therefore, typical Darrieus type turbines use lift type blades. There are a variety of blade shapes, in other words, cross-sectional shapes. For example, as shown in Figs. 2a, the blade may be a symmetrical blade 210 or, as shown in Fig. 2b, it may be an asymmetrical blade 220.

The general shape of the vertical shaft turbine is as follows.

1. An H-shaped vertical shaft structure provided with two, three, four, five or six rows of blades each of which has a single blade structure
2. A shape in which, based on the structure of No. 1, Savonius type blades are coupled to a rotating shaft, for example, a Darrieus type rotating shaft
3. A pure Savonius type structure
4. A shape in which a depression is formed in an inner or outer surface of each blade of the structure of No. 1
5. A structure in which a turbo function (including a guide vane that can concentrate inlet wind to one side blade) is applied to the structure of No. 3
6. A structure in which each blade has a spiral shape
7. A structure in which each blade has a continuously curved shape
8. A structure in which each blade has a yacht sail shape (formed by longitudinally cutting a cylindrical body in a shape similar to that of a Darrieus shape)
9. A modification of the structure of No. 1 in which the angle of incidence can be changed using a special device, unlike the structure of No. 1 having a fixed angle of incidence
10. A double blade structure

In the conventional vertical shaft turbine, in the case of Nos. 1 through 9, but not in the case of No. 10, each blade of the turbine has a single blade structure.

Below, the principle of the conventional vertical shaft turbine and its problems will be described in brief.

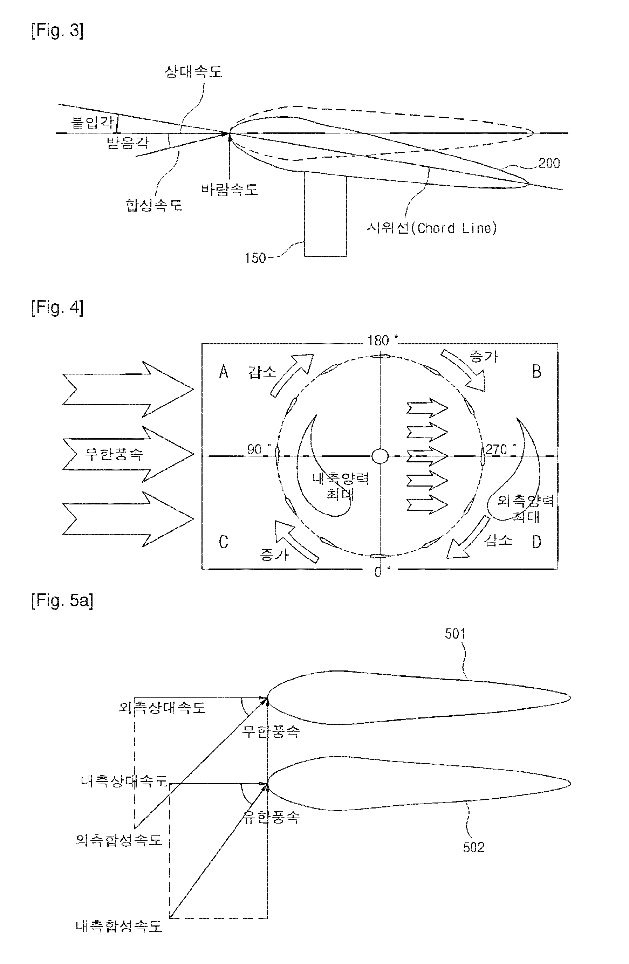

First, terms used in this specification will be defined with reference to Fig. 3.

1. Mean camber line: a mean line between an upper camber and a lower camber, a thickness center line
2. Chord line: a straight line connecting a leading edge, that is, a front end, of the mean camber line of the blade 200 to a trailing edge, that is, a rear end, of the mean camber line
3. Maximum camber: the maximum distance from the chord line to the mean camber line
4. Angle of incidence: an angle between a lateral line of a connection arm 150 and the chord line of the blade 200, or an angle between the longitudinal axis of the blade and the chord line
5. Angle of attack: a resultant speed angle of a wind vector and a relative speed vector of a tangent line when the blade 200 rotates around a shaft, or an angle formed by relative wind and the chord line
6. Resultant speed: a resultant speed vector of the relative speed and the wind speed

In a coupling structure of each blade of the above-mentioned Darrieus type turbine, a predetermined angle of incidence is formed by mechanically coupling the blade to a corresponding connection arm or rotating arm, and an angle of attack is formed by the above coupling structure and a resultant speed vector of infinite wind speed and a tangent line defined by rotation of the blade, whereby lift can be generated.

With regard to the angle of attack, when the blade has a symmetrical cross-sectional shape, lift can be generated in all angles of direction.

Fig. 4 illustrates torque characteristics of individual blades on the assumption that infinite wind (V∞) comes into contact with the blades that are located in areas A and C and then makes contact with the blades that are located in areas B and D after passing through the turbine body. Fig. 4 refers to a drawing used in a spring scientific treatise entitled "Aerodynamic study for designing small vertical shaft turbine" disclosed in The Korean Society for New and Renewable Energy in 2007.

Referring to Fig. 4, in areas A and C, a resultant speed of relative speed vectors of blades of the turbine is largely increased by infinite wind (V∞) so that an ideal angle of attack is formed, and generated lift is larger than that of areas B and D.

However, this vertical shaft turbine has the following problems. The speed of the turbine is gradually increased by initial external wind energy. As the number of blades of the turbine or the RPM is increased, the amount of energy (V∞) transmitted to the areas B and D is reduced, so that a resultant speed vector in the areas B and D includes only pure relative speed. Because the angle of attack formed by the relative speed is reduced, lift generated in the areas B and D is reduced compared to that of the areas A and C.

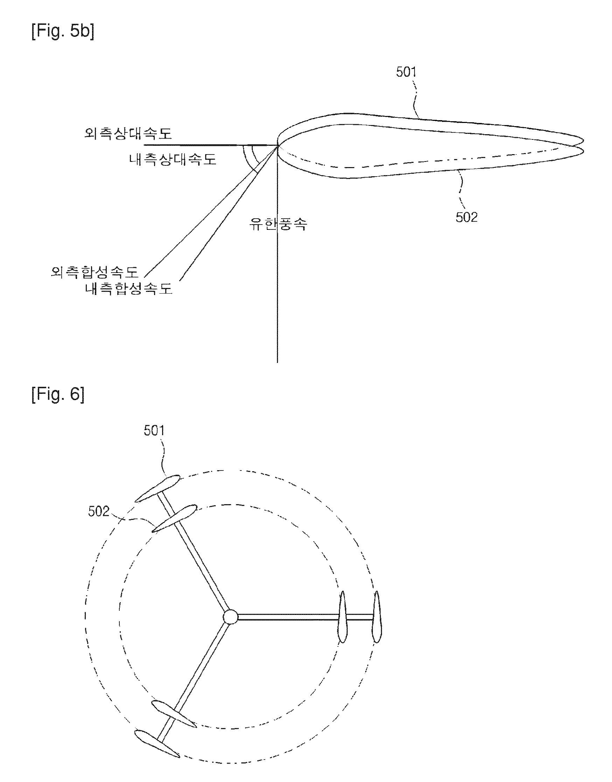

Meanwhile, in the conventional vertical shaft wind power turbine, a double-blade arrangement structure has the following problems. As shown in Figs. 5a, 5b and 6, in the double-blade type turbine, an outer blade 501 and an inner blade 502, which both have the same blade shape, are coupled to each of rotating arms which are arranged around a rotating shaft at positions spaced apart from each other at regular intervals. In the areas A and B, flow around the inner blades 502 is impeded by the outer blades 501, whereby lift generated by the inner blades 502 is reduced. Furthermore, the outer and inner blades 501 and 502 structurally have the same angle of incidence. At a specific angle of direction of all angles of direction, the angle of attack formed by the outer blade 501 and the angle of attack formed by the inner blade 502 are always different from each other. That is, the angle of attack is a resultant vector angle of the infinite wind speed vector and the relative speed vector. Because of structural locations of the blades, an inner radius and an outer radius differ from each other, so that the relative speeds of the inner and outer blades with respect to the rotating shaft also differ from each other. Therefore, although torque generated by the two blades 501 and 502 must be transmitted to the turbine as force for rotating the turbine, because the torque generated by the inner blade 502 is less than the torque generated by the outer blade 501, it is not sufficient to increase the rotating force of the turbine. Referring to Fig. 4, Fig. 5a illustrates variation in magnitude of a resultant speed and an angle of attack in the area A, and Fig. 5b illustrates variation in magnitude of a resultant speed and an angle of attack in the area C.

As such, in the conventional vertical shaft turbine having the double-blade structure, although the same infinite wind speed is applied to the inner and outer blades 502 and 501, the relative speeds of the inner and outer blades 502 and 501 with respect to the rotating shaft are different from each other. Therefore, the vector values of the resultant speeds of the inner and outer blades differ from each other. The absolute value of the resultant energy of the inner blade 502 is relatively reduced, while the angle of attack thereof is increased. Thus, at a specific angle of direction, because of the air flow characteristics of the airfoil type blade, the lift reduces and enters a stall state, and a problem of an increase in drag force is caused.

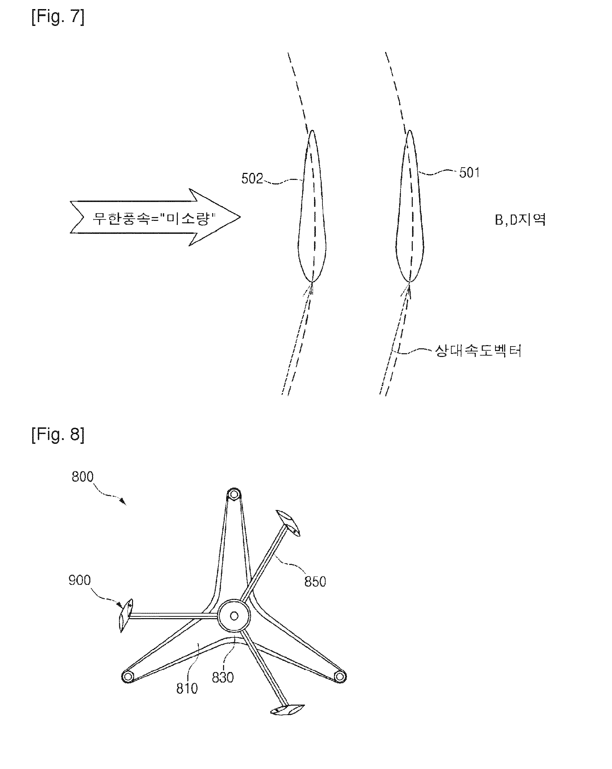

Fig. 7 illustrates the air flow characteristics of the trailing area of the conventional vertical shaft turbine having the double-blade structure. Fig. 7 shows a phenomenon in which, because an inlet rate of wind is low in the areas B and D, the resultant speed and the angle of attack depend on the relative speed vector.

The problems of the conventional vertical shaft turbine having the double-blade structure are as follows.

1. In the double-blade arrangement, the outer blade and the inner blade are oriented parallel to each other and arranged at positions spaced apart from each other in a direction toward the rotating shaft. Thus, although the outer and inner blades have the same angle of incidence, they have different angles of attack. Therefore, in the areas B and D, the energy transmission of the outer blade is impeded by the inner blade, whereby the output of the turbine is reduced.
2. There is no technique that can limit the maximum speed.
3. When two or more blade units are arranged, because they are simply arranged in the direction toward the rotating shaft so as to have a parallel arrangement structure, there is no effect of an increase in an effective area.
4. The initial cut-in performance is low.

Accordingly, the present invention has been made keeping in mind the above problems occurring in the prior art, and an object of the present invention is to provide a vertical shaft turbine which is configured such that multiple angles of attack of blades can be embodied to generate an effective amount of energy even under conditions of low wind speed and low rotation speed, whereby a problem of low initial cut-in performance, which has occurred in the conventional Darrieus type turbine, can be solved.

Another object of the present invention is to provide a bidirectional stack type vertical shaft turbine which can rapidly respond to even intermittent wind so that the turbine can reach a constant speed in a short time, thus enhancing the efficiency and operational rate.

In order to accomplish the above objects, in an aspect, the present invention provides a vertical shaft turbine, including a multi-blade unit; a blade arm supporting the multi-blade unit; a rotating shaft to which the blade arm is fixed; and a support supporting the rotating shaft.

Here, the multi-blade unit includes a first blade and a second blade which are disposed at positions spaced apart from each other by a predetermined distance, and a weight which is installed in a rear end of the first or second blade. The first blade and the second blade have different phases with respect to a direction in which the multi-blade unit rotates. A front end of the blade that is provided with the weight acts as a centrifugal rotating shaft.

In an embodiment, the vertical shaft turbine may further include a centrifugal force responding device which is provided on the front end of the first blade and supports the rotation of the weight of the first blade in response to the centrifugal force. In another embodiment, the vertical shaft turbine may further include a centrifugal force responding device which is provided on the front end of the second blade and supports the rotation of the weight of the first blade in response to the centrifugal force.

The centrifugal force responding device may include a compression spring, a compression damper, a hydraulic device, an electromagnetic valve, a motor, a stress device using a permanent magnet or a combination thereof.

In another aspect, the present invention provides a bidirectional stack type vertical shaft turbine, comprising: a plurality of vertical shaft turbines, each of which includes a multi-blade unit, a blade arm, a rotating shaft and a support; an upper one-way clutch and electromagnetic clutch set which is coupled to an upper vertical turbine of the plurality of vertical turbines; a lower one-way clutch and electromagnetic clutch set which is coupled to a lower vertical turbine provided adjacent to the upper vertical turbine; a generator module unit provided between the upper and lower one-way clutch and electromagnetic clutch sets; and an output slip ring provided between the generator module unit and the upper or lower one-way clutch and electromagnetic clutch set.

The vertical shaft turbine according to the present invention includes a multi-blade unit, an arm connected to the multi-blade unit, a rotating shaft connected to the arm, and a support supporting the rotating shaft. The multi-blade unit includes: a cassette connected to the arm; a centrifugal rotating shaft coupled to the cassette so as to be rotatable; a first blade coupled to the centrifugal rotating shaft so as to be rotatable; a centrifugal force responding device coupled to the first blade; and a second blade coupled to the cassette, wherein, when the rotating shaft is rotated, the first blade is rotated around the centrifugal rotating shaft by force transmitted from the centrifugal force responding device in response to centrifugal force.

In an embodiment, the vertical shaft turbine may further include a weight installed in a trailing edge or a leading edge of the first blade. The weight functions to increase force of rotating the first blade that is rotated by the force of the centrifugal force responding device. Here, the phase of the first blade leads the phase of the second blade with respect to the direction of rotation when the multi-blade unit rotates around the rotating shaft.

In an embodiment, another weight may be installed in the second blade. In this case, this weight may be disposed in the leading edge of the second blade.

In an embodiment, the phase of the second blade leads the phase of the first blade with respect to the direction of rotation when the multi-blade unit rotates around the rotating shaft. Further, the second blade may be disposed at a position further from the rotating shaft than the first blade. In this case, a weight may be disposed in the trailing edge of the second blade, and the other weight may be disposed in the leading edge of the first blade.

In an embodiment, the vertical shaft turbine may further include an end stopper provided in the cassette, the first or second blade or each of the cassette and the first and second blades, the end stopper limiting an angle at which the first or second blade rotates around the centrifugal rotating shaft.

In an embodiment, the first blade or the second blade may have a symmetrical shape, an asymmetrical shape, a lift type or a drag type airfoil shape or a combination shape thereof. Preferably, the first or second blade may have a symmetrical airfoil shape. Of course, the first and second blades may have different types of airfoil shapes. Preferably, a length and width ratio of each of the first and second blades may be defined such that a longer side is 4 times to 12 times as long as a shorter side. Here, the length and width ratio refers to a ratio between a length of the blade and a length of a chord line. This is based on a chord length of a single blade. For example, when the chord length is 200 mm, the length of the blade ranges from about 800 mm to about 2400 mm.

In an embodiment, when the phase of the first blade leads the phase of the second blade with respect to the direction of rotation around the rotating shaft, an initial angle of incidence of the first blade may be larger than an initial angle of incidence of the second blade. For instance, the initial angle of incidence of the first blade may be greater than the maximum camber of the second blade, based on the case where the angle of incidence of the second blade is zero, so as to form a minimum separation distance for preventing flow interference therebetween in each rotation zone with respect to the direction of wind.

Furthermore, in an embodiment, the first blade and the second blade may be configured such that they have different first angles of incidence at which the blades are fixed when in an initial cut-in operation or low speed rotation state, and different second angles of incidence at which the blades are fixed when in a high speed rotation or rated operation state.

In an embodiment, a radius of rotation of the first blade around the rotating shaft may be preferably less than a radius of rotation of the second blade.

In an embodiment, the multi-blade unit may comprise three or more rows of multi-blade units, preferably, one of three, four, five and six rows of multi-blade units, coupled to the rotating shaft in a regular interval arrangement. For example, the double-three rows of multi-blade units may be coupled to the rotating shaft in a 120°-regular interval arrangement.

In an embodiment, the distance that the first blade leads the second blade may be 2% or more of the length of the chord line of the second blade. This refers to the fact that the first blade and the second blade are not parallel to each other.

In an embodiment, a difference between the distance between the first blade and the rotating shaft and the distance between the second blade and the rotating shaft may be greater than the maximum camber of the first or second blade.

In a further aspect, the present invention provides a bidirectional stack type vertical shaft turbine provided with the vertical shaft turbine of any one of the above-mentioned embodiments. The bidirectional stack type vertical shaft turbine includes a first bidirectional vertical shaft turbine. The first bidirectional vertical shaft turbine has a first vertical shaft turbine rotating in a first direction, and a second vertical shaft turbine rotating in a second direction opposite to the first direction.

In an embodiment, the bidirectional stack type vertical shaft turbine may further include a second bidirectional vertical shaft turbine, having a third vertical shaft turbine rotating in the first direction, and a fourth vertical shaft turbine rotating in the second direction. The first and second bidirectional vertical shaft turbines may be configured such that the first, second, third and fourth vertical shaft turbines are vertically stacked on top of one another in a sequence from the bottom to the top.

In an embodiment, the bidirectional stack type vertical shaft turbine may further include: an upper one-way clutch and electromagnetic clutch set provided between the rotating shafts of the first and second vertical shaft turbines at a position adjacent to the first vertical shaft turbine; and a lower one-way clutch and electromagnetic clutch set provided at a position adjacent to the second vertical shaft turbine.

In an embodiment, the bidirectional stack type vertical shaft turbine may further include: a generator module unit provided between the upper and lower one-way clutch and electromagnetic clutch sets; and an output slip ring provided between the generator module unit and the upper or lower one-way clutch and electromagnetic clutch set.

In an embodiment, the multi-blade unit provided in each of the first vertical shaft turbine and the second vertical shaft turbine may be configured such that the first or second blade has a shape inclined at a predetermined angle in a direction of rotation of the first or second blade or in a direction opposite to the direction of the rotation, or has a continuously curved shape, or a shape inclined at a predetermined angle in a direction in which centrifugal force is applied thereto or in a direction towards the rotating shaft opposite to the direction of the application of the centrifugal force.

The present invention provides a blade structure of a vertical shaft turbine which embodies multiple angles of attack of blades depending on a relative wind speed, whereby the problem of low initial cut-in performance of the Darrieus type turbine can be solved, and an effective amount of energy can be generated even under conditions of low wind speed and low rotation speed.

Furthermore, because the present invention uses a double-blade structure which can realize multiple angles of attack, independent mobility of each of an upper turbine which has a blade that rotates in a first direction and a lower turbine which has a blade that rotates in a second direction opposite to the first direction can be enhanced.

In addition, each of the upper and lower turbines can independently increase the rotating speed. Even when the wind speed exceeds a regulated wind speed, the speed of the turbine is maintained at a predetermined speed, rather than entering a cut-out speed state, so that the reliability in rotation of the turbine can be enhanced. Moreover, in the present invention, pitch control and stall control methods which are typically used in a large wind power generator can be realized merely by using mechanical elements. Therefore, even if a separate program or device for precise operation control is not used, the present invention can provide superior generation efficiency and availability.

Figs. 1 through 7 are views illustrating a typical wind power generator and a conventional vertical shaft turbine;

Fig. 8 is a schematic plan view illustrating a vertical shaft turbine provided with blades which embodies a multiple attack angle structure, according to an embodiment of the present invention;

Fig. 9 is a schematic plan view illustrating a multi-blade unit of the vertical shaft turbine of Fig. 8;

Fig. 10a is a view showing an embodiment of the multi-blade unit of the vertical shaft turbine of Fig. 9;

Fig. 10b is a view illustrating another embodiment of the multi-blade unit of the vertical shaft turbine of Fig. 9;

Fig. 10c is a view illustrating a further embodiment of the multi-blade unit of the vertical shaft turbine of Fig. 9;

Figs. 11a through 11c are views illustrating yet another embodiment of the multi-blade unit of the vertical shaft turbine of Fig. 9;

Figs. 12a and 12b are views illustrating typical angles of attack;

Fig. 13 and 14 are views illustrating the operation principle of the multi-blade unit of the vertical shaft turbine of Figs. 8 through 11c;

Figs. 15 and 16 are views illustrating the operation and effect of the vertical shaft turbine of Figs. 8 through 11c;

Fig. 17 is a view illustrating a wind power generator according to a comparative example of the present invention;

Fig. 18 is a view illustrating a wind power generator according to another comparative example of the present invention;

Fig. 19 is a perspective view of a bidirectional stack type vertical shaft turbine including vertical shaft turbines, according to an embodiment of the present invention; and

Fig. 20 is a partial enlarged perspective view of the bidirectional stack type vertical shaft turbine of Fig. 19.

Hereinafter, embodiments of the present invention will be described in detail with reference to the attached drawings.

An embodiment of the present invention, which can solve aeromechanic problems of the above-stated typical turbine and enhance the performance of a turbine even under irregular wind conditions, that is, irregular wind speed, will be explained in detail.

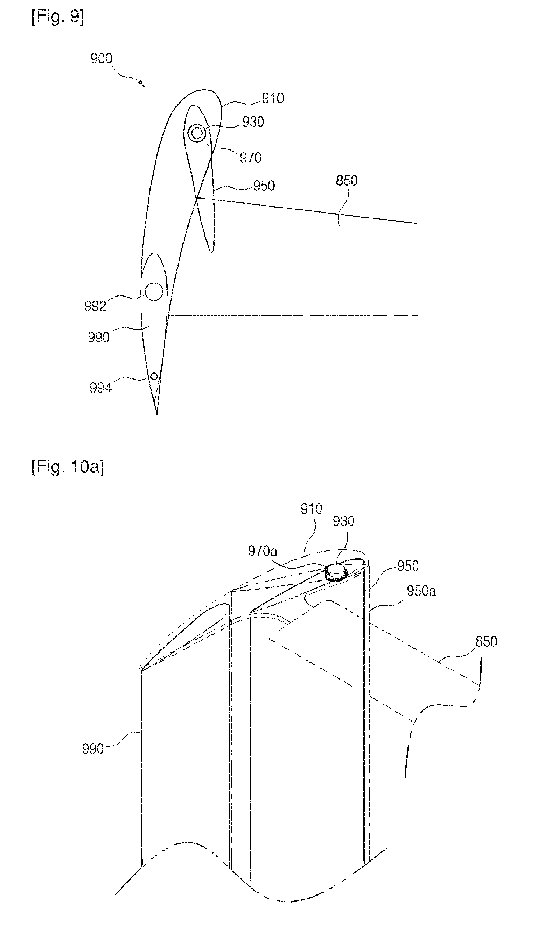

Fig. 8 is a schematic plan view illustrating a vertical shaft turbine provided with blades which embodies a multiple attack angle structure, according to an embodiment of the present invention. Fig. 9 is a schematic plan view illustrating a multi-blade unit of the vertical shaft turbine of Fig. 8.

Referring to Figs. 8 and 9, the vertical shaft turbine 800 according to the embodiment of the present invention includes a support 810; a rotating shaft 830 which is coupled to the support 810 and oriented in a direction approximately perpendicular to the surface of the earth; arms 850 which are coupled to the rotating shaft 830; and a multi-blade unit 900 which is coupled to each arm 850.

The support 810 functions to fix the vertical shaft turbine 800 to the ground, equipment or a structure and support it thereon. The support 810 is preferably formed of a material or structure having sufficient durability to withstand vibrations or external force generated by the operation of the vertical shaft turbine 800.

The rotating shaft 830 is coupled to a rotor of a generator (not shown) fixed to the support 810. The rotating shaft 830 receives, through the arms 950, the rotating force of the multi-blade units 900 that is generated by wind power and transmits the rotating force to the generator. In this embodiment, the rotating shaft 830 may be referred to as a center rotating shaft to distinguish it from a centrifugal rotating shaft 930 which will be explained later herein.

Each arm 850 is an element used to connect the corresponding multi-blade unit 900 to the rotating shaft 830. The arm 850 fixes the multi-blade unit 900 thereto or supports it thereon. In this embodiment, the arm 850 may be referred to as a connection arm or a rotating arm.

As shown in Fig. 9, in detail, the multi-blade unit 900 includes a cassette 910, a centrifugal rotating shaft 930, a first blade 950, a centrifugal force responding device 970 and a second blade 990. In this embodiment, the multi-blade unit 900 is configured such that when the vertical shaft turbine 800 is operated, an angle of attack corresponding to wind speed or centrifugal force is formed.

In the multi-blade unit 900, the cassette 910 functions to fix the multi-blade unit 900 to the arm 850. The cassette 910 includes an upper cassette part and a lower cassette part which are disposed in pair on opposite ends of the first and second blades 950 and 990 that extend in the vertical direction, in other words, in a direction perpendicular to the ground. The upper and lower cassette parts support the opposite ends of the first and second blades 950 and 990. The upper cassette part and the lower cassette part are the same in all aspects other than being disposed at different positions in such a way that they face each other. Therefore, in the following explanation, for the sake of brevity, the upper cassette part will be mainly explained. The upper cassette part corresponds to the cassette 910. The cassette 910 may integrally extend from an end of the arm 850, thus forming a single body structure. Alternatively, the cassette 910 may be separately manufactured and then coupled to the end of the arm 850.

The centrifugal rotating shaft 930 is rotatably coupled to the cassette 910 and is fixed to the first blade 950. For example, the centrifugal rotating shaft 930 may be configured in such a way that a protrusion provided on a predetermined portion of the first blade 950 is disposed in a hole of the cassette 910.

The first blade 950 is configured such that the longitudinal direction thereof is approximately perpendicular to the ground. The first blade 950 is coupled to the cassette 910 at a location which leads in phase the second blade 990 with respect to the direction of revolution. In this embodiment, the first blade 950 has a symmetrical blade shape.

The centrifugal force responding device 970 is coupled to the first blade 950. When the vertical shaft turbine 800 is operated, the centrifugal force responding device 970 makes the first blade 950 rotate around the centrifugal rotating shaft 930 within a predetermined angular range in response to the strength of wind or centrifugal force applied to the first blade 950. A variety of embodiments of the centrifugal force responding device 970 will be described in detail later herein.

The general shape and construction of the second blade 990 are the same as those of the first blade 950 with the exception of the fact that the first blade 950 is coupled to the cassette 910 by the centrifugal rotating shaft 930. The upper and lower ends of the second blade 990 with respect to the longitudinal direction are respectively fixed to the cassette parts which are disposed at the upper and lower ends of the second blade 990. For instance, the second blade 990 may be welded to the cassette 910 and have welding portions 992 and 994.

The technical characteristics applied to the vertical shaft turbine according to the present invention will be explained in brief based on the vertical shaft turbine 800 of the above embodiment.

The construction of the blades which rotate using lift in the vertical shaft wind generator, that is, the vertical shaft turbine, which rotates in the horizontal direction parallel to the ground, has the following characteristics. An outer blade [corresponding to the second blade 990] and an inner blade [corresponding to the first blade 950] have different angles of incidence. The inner blade is coupled to the centrifugal rotating shaft so that the angle of incidence thereof is varied by centrifugal force. A centrifugal force control device [corresponding to the centrifugal force responding device 970] is installed in the inner blade so as to control the centrifugal force. Thereby, when the vertical shaft turbine is operated, the inner blade is rotated at a predetermined angle corresponding to centrifugal force of a resultant velocity vector component of the centrifugal force.

A spring device, a hydraulic damper, an electrical solenoid, a permanent magnet, etc., which are well known devices, can be used as the centrifugal force control device.

In the construction of the blade, an initial fixing end stopper which limits the rotating angle of the inner blade is provided in upper and lower support plates [corresponding to the cassette 910].

Furthermore, in the multi-blade unit 900, the first or second blade 950 or 990 is embodied using a symmetrical or asymmetrical blade that is well known or an airfoil type blade that has lift or drag characteristics. Preferably, the first or second blade 950 or 990 is configured such that a ratio of a chord length to a chord span ranges from 4 times to 12 times.

In addition, in the multi-blade unit 900, the first and second blades 950 and 990 have different initial angles of incidence such that they have multiple angles of attack. For example, the first and second blades 950 and 990 are configured such that the angle of incidence of the first blade 950 is greater than that of the second blade 990.

Further, the multi-blade unit 900 may comprise three rows of multi-blade units 900 which are arranged around the rotating shaft at positions spaced apart from each other at regular intervals of 120°. In each multi-blade unit 900, the first and second blades 950 and 990 are supported by upper and lower cassette parts of the single cassette unit. Of course, three or more rows of multi-blade units 900, that is, preferably, three, four, five or six rows of multi-blade units 900, may be coupled to the rotating shaft in a regular interval arrangement.

In the case where the first blade 950 is disposed at a position closer to the rotating shaft 830 of the vertical shaft turbine 800 than is the second blade 990, the first blade 950 is configured such that the phase thereof leads that of the second blade 990 with respect to the direction of revolution. In this case, the first and second blades 950 and 990 are configured such that the initial angle of incidence of the first blade 950 is greater than that of the second blade 990. For example, the initial angle of incidence of the first blade 950 is greater than the maximum camber of the second blade 990, based on the case where the angle of incidence of the second blade 990 is zero, so as to form a minimum separation distance for preventing flow interference therebetween in each rotation zone with respect to the direction of wind.

Furthermore, in the above-mentioned case, it is preferable that the distance that the first blade 950 leads the second blade 990 is 2% or more of the length of the chord line of the second blade 990. Here, a difference between the distance between the first blade and the rotating shaft and the distance between the second blade and the rotating shaft is preferably greater than the maximum camber of the first or second blade.

According to the above-stated construction, because the first blade 950 and the second blade 990 are not parallel to each other, the initial cut-in performance and the rotation-zonal performance can be enhanced compared to the conventional technique in which the blades are oriented parallel to each other.

Fig. 10a is a view showing an embodiment of the multi-blade unit of the vertical shaft turbine of Fig. 9.

In this embodiment, as shown in Fig. 10a, for the sake of brevity, elements exclusive of the first blade 950, the second blade 990 and a spring 970a are designated by the dotted line or the two-dot chain line.

Referring to Fig. 10a, the multi-blade unit according to this embodiment has the same construction as that of the multi-blade unit of the earlier explained embodiment, with the exception of the spring 970a that corresponds to the centrifugal force control device or the centrifugal force responding device.

The spring 970a is provided on the centrifugal rotating shaft 930 such that when the centrifugal rotating shaft 930 is rotated by force (e.g., centrifugal force) by which the trailing edge of the first blade 950 is biased outwards, the spring 970a can accumulate elastic potential energy. For example, the spring 970a may comprise a coil spring wound around the outer surface of the centrifugal rotating shaft 930.

In the multi-blade unit according to this embodiment, the first blade 950 includes the centrifugal rotating shaft 930 which is rotatably coupled to the cassette 910. Further, the first blade 950 maintains the initial angle of incidence using the spring 970a which is provided on the centrifugal rotating shaft 930. When the vertical shaft turbine is operated, the first blade 950 rotates at a predetermined angle in a direction in which elastic force is accumulated in the coil spring 970a by the centrifugal force. The first blade that has been rotated at the predetermined angle is designated by the two-dot chain line and denoted by reference numeral 950a. Here, the second blade 950 is fixed to the cassette 910 and maintains the initial angle of incidence, regardless of rotation of the first blade 950.

In this embodiment, the coil spring 970a which is provided on the circumferential outer surface of the centrifugal rotating shaft 950 between the first blade 950 and the cassette 910 is used as the centrifugal force control device, in other words, as the centrifugal force responding device. Thus, when the vertical shaft turbine is operated, the first blade 950 can rotate on its own axis in response to the wind speed or centrifugal force applied to the first blade 950, whereby the angle of attack of the entire multi-blade unit can be appropriately controlled in accordance with the speed of revolution. In other words, in this embodiment, initial cut-in of the vertical shaft turbine can be easily performed, and it can rapidly reach the rated speed. Furthermore, this embodiment of the present invention can use the mechanical construction to automatically prevent the speed of revolution from excessively increasing and reaching a cut-out speed.

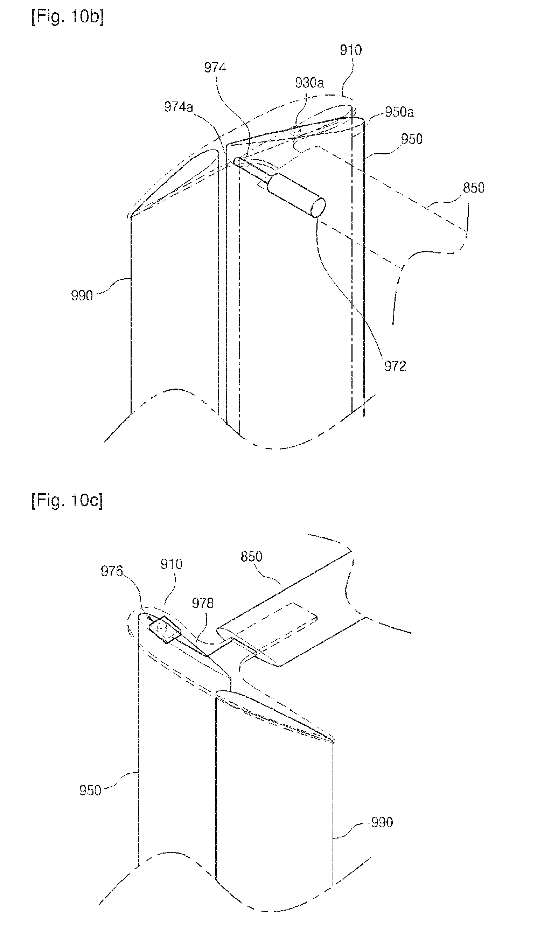

Fig. 10b is a view illustrating another embodiment of the multi-blade unit of the vertical shaft turbine of Fig. 9.

In this embodiment, as shown in Fig. 10b, for the sake of brevity, elements exclusive of the first blade 950, the second blade 990 and a hydraulic device 972 are designated by the dotted line or the two-dot chain line.

Referring to Fig. 10b, the multi-blade unit of the vertical shaft turbine according to this embodiment includes a cassette 910, a centrifugal rotating shaft 930a, the first blade 950, the hydraulic device 972 and the second blade 990.

The centrifugal rotating shaft 930a is provided on an approximate longitudinal and lateral center of the first blade 950 so that the centrifugal rotating shaft 930a can be easily rotated around the centrifugal rotating shaft 930a by the hydraulic device 972.

In this embodiment, the hydraulic device 972 is installed in the arm 850. For example, the hydraulic device 972 includes a cylinder body which is installed in the arm 850, and a variable arm 974 which is coupled at an end thereof to a piston provided in the cylinder body and is inserted into the cylinder body. The variable arm 974 is configured such that, when the vertical shaft turbine is operated, the variable arm 974 is contracted from the first blade 950 into the cylinder body depending on the intensity of the centrifugal force applied to the arm 850 and the multi-blade unit and is thus reduced in length. In Fig. 10b, the current position of the first blade 950 corresponds to a state in which the first blade, which has been at the initial position that is designated by reference numeral 950a and the two-dot chain line, is pushed by the centrifugal force.

In other words, the hydraulic device 972 is a compressible cylinder which is operated in such a way that oil in the cylinder is compressed by external force and, when the external force is eliminated, it returns to the original state. In this embodiment, the hydraulic device 972 is configured such that, when centrifugal force occurs, the hydraulic device 972 is contracted by force by which the trailing edge of the first blade 950 is biased towards the cylinder body, that is, towards the center rotating shaft, and when the intensity of the centrifugal force is reduced, it is expanded in the opposite direction. Here, to facilitate the rotation of the first blade 950 caused by the hydraulic device 972, that is, to move the center of gravity of the first blade 950 towards the leading edge, the centrifugal rotating shaft 930a is disposed at a position closer to the trailing edge than is the centrifugal rotating shaft of Fig. 10a.

According to the above-mentioned construction, the hydraulic device 972 is configured such that when the vertical shaft turbine is operated, the leading edge of the first blade 950 is rotated by the centrifugal force in the direction in which the centrifugal force acts, while the trailing edge of the first blade 950 is moved towards the rotating shaft or the arm 850. In other words, compressive force in the cylinder body extracts or retracts the variable arm 974 in response to the centrifugal force, that is, until equilibrium of force is achieved. Thereby, when the vertical shaft turbine is operated or the rated operation is conducted, and when the operation of the vertical shaft turbine is interrupted or it starts up, the angle of attack of the first blade 950 can be automatically controlled in response to the speed of revolution or the centrifugal force.

Fig. 10c is a view illustrating a further embodiment of the multi-blade unit of the vertical shaft turbine of Fig. 9.

Referring to Fig. 10c, the multi-blade unit of this embodiment includes a cassette 910, a centrifugal rotating shaft 930, a first blade 950, an electrical device 976 and a second blade 990.

The multi-blade unit according to this embodiment has the same construction as that of the multi-blade unit of the multi-blade unit of the embodiment that has been illustrated with reference to Fig. 10a, with the exception of the electrical device 976 that corresponds to the centrifugal force control device or the centrifugal force responding device.

The electrical device 976 of this embodiment is a means for rotating the first blade 950 via the centrifugal rotating shaft 930 using electric power in response to the strength of a wind vector, the rotating force or the centrifugal force. The electrical device 976 can be embodied using a servomotor which is coupled to the centrifugal rotating shaft 930. The electrical device 976 is provided on an upper or lower end of the first blade 950 and is connected to a control box of the vertical shaft turbine by a control cable 978 which is arranged through the internal space of the arm 850 and connected to a slip ring provided in the rotating shaft.

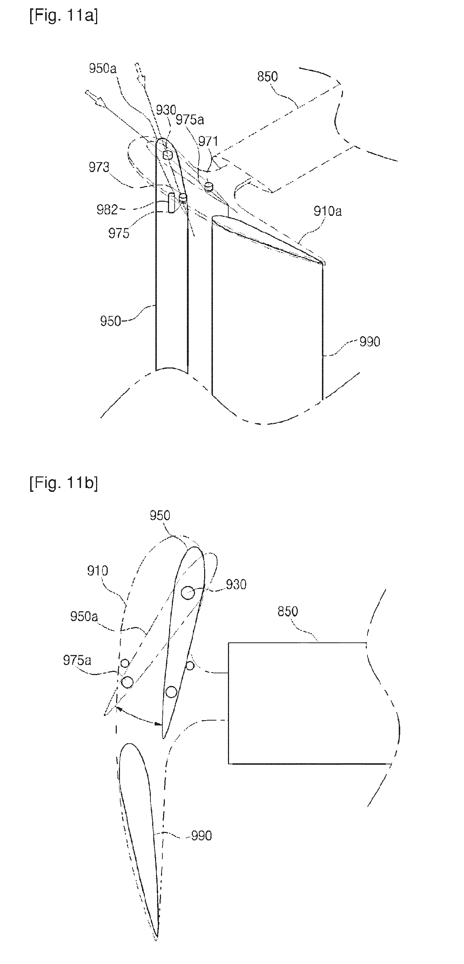

Figs. 11a through 11c are views illustrating yet another embodiment of the multi-blade unit of the vertical shaft turbine of Fig. 9.

Referring to Figs. 11a and 11b, the multi-blade unit according to this embodiment includes a cassette 910a, a centrifugal rotating shaft 930, a first blade 950, a first magnet member 971, a second magnet member 973, a third magnet member 975, a second blade 990 and a stopper 982.

In this embodiment, the centrifugal force responding device corresponds to a combination of the first magnet member 971, the second magnet member 973 and the third magnet member 975. Here, the first magnet member 971 is disposed at one side of the cassette 910a, and the second magnet member 973 is disposed at the other side of the cassette 910a. The first and second magnet members 971 and 973 are provided in such a way that the opposite poles thereof face each other. The third magnet member 975 is provided on a surface of the first blade 950 at a position adjacent to the cassette 910a.

In Figs. 11a and 11b, reference numeral 950a denotes an orientation of the first blade 950 when it has been rotated, and reference numeral 975a denotes a position of the second magnet member 975 when the first blade 950 has been rotated.

In detail, the centrifugal force responding device is configured such that the different poles of the third magnet member 975 and the first magnet member 971 that is adjacent to the arm 850 face each other. When there is little centrifugal force, or the operation of the vertical shaft turbine is at the initial stage or is interrupted, the first blade 950 is maintained at the normal position by attractive force between the different poles of the first and third magnet members 971 and 975. As rotating force or centrifugal force applied to the first blade 950 is increased, the trailing edge of the first blade 950 is rotated towards the second magnet member 973 in response to the force. In other words, when the centrifugal force is larger than the attractive force of the magnet members, the trailing edge of the first blade 950 is moved in the direction in which the centrifugal force is applied thereto.

The centrifugal force responding device is embodied in such a way that the same poles of the second and third magnet members 973 and 975 face each other. Therefore, as the centrifugal force applied to the first blade 950 is reduced, the trailing edge of the first blade 950 is returned by repulsive force between the same poles to its original position, that is, towards the position at which the first magnet member 971 is disposed. Furthermore, because the centrifugal force responding device is configured such that the same poles of the second and third magnet members 973 and 975 face each other, the first blade 950 can be prevented from being rapidly rotated ahead of the outer stopper 982 in the direction in which the centrifugal force is applied thereto.

An inner stopper (not shown) and the outer stopper 982 limit the rotating movement of the trailing edge of the first blade 950a, thus preventing the first blade 950 from entering a stall state. At least one stopper 982 is fixed to the cassette 910a in a shape in which a portion thereof protrudes from a surface of the cassette 910a.

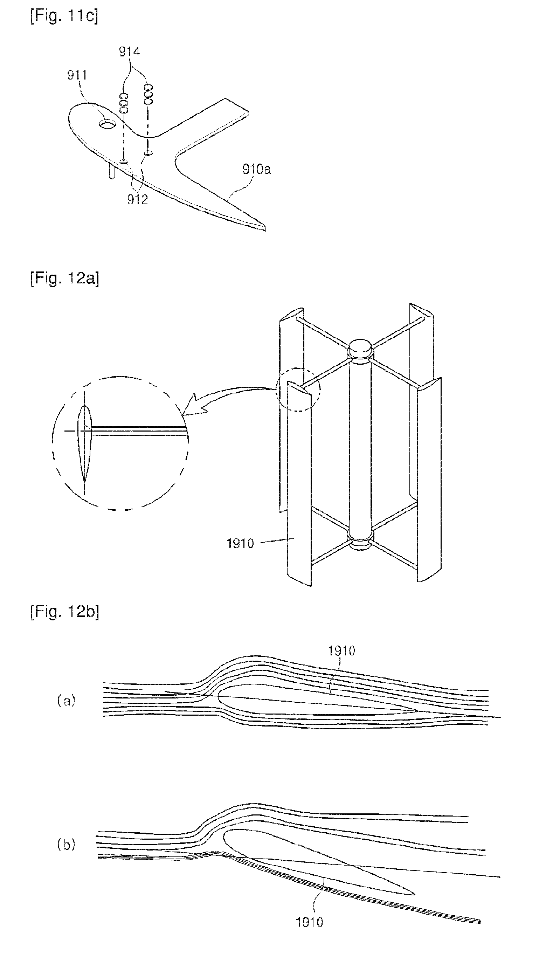

As shown in Fig. 11c, each of the first and second magnet members 971 and 973 comprises a magnet which is disposed in a depression 912 formed in a surface of the cassette 910a. Here, the first magnet member 971 or the second magnet member 973 may comprise a plurality of disc-shaped magnets 914. The magnitude of each magnet member may be adjusted by changing the number of magnets 914.

Preferably, the depression 912 is formed in the cassette 910a rather than completely passing through the cassette 910a in the thickness direction. In this embodiment, the cassette 910a may have therein a through hole 911 into which the centrifugal rotating shaft 930 provided on the first blade 950a is inserted.

Hereinafter, the operation of the multi-blade unit that has been illustrated with reference to Figs. 8 through 11c will be described in detail.

Figs. 12a and 12b are views illustrating an angle of attack of a typical blade.

As shown in Fig. 12a, a blade 1210 of a typical vertical shaft turbine has a single blade structure and is connected to a connection arm of a rotating shaft of a turbine in a direction perpendicular to an aerodynamic center angle. In this case, the angle of incidence is zero.

Depending on the intended purpose, one of a variety of rows of blades, e.g., two, three, four or five rows of blades, can be provided. At present, three or four rows of blades are mainly used. As shown in Fig. 12a, this comparative embodiment shows a four-row blade structure.

While the blades are rotated, a resultant vector of a vector formed by an infinite wind speed and a relative speed vector generated by the rotation is formed. Further, an angle of attack is defined between the resultant vector and the chord line of the blade.

As shown in (a) and (b) of Fig. 12b, when the infinite wind speed is greater than the relative speed, the angle of attack is increased. The maximum lift center is moved towards the leading edge of the blade, and laminar flow which tries to infinitely flow along the surface of the blade due to flow inertia is deformed, thereby forming turbulence. This is referred to as a stall.

Meanwhile, when the relative speed is greater than the infinite wind speed, the angle of attack becomes close to the tangent line of a circle, and the center of lift is moved towards the trailing edge of the blade, whereby the magnitude of lift is reduced.

Furthermore, in the case of the blade of which the angle of incidence is zero, a tip speed ratio (a ratio of a speed of an outermost portion of the blade to the infinite wind speed) is comparatively low in urban environment of low wind speed. Therefore, a vector angle of the infinite wind speed is relatively increased, a lift factor of the blade having a lift airfoil structure is reduced. As a result, the speed of the operation is not sufficient.

When the speed of the operation is higher than a predetermined speed, in other words, when the tip speed ratio is comparatively high, a relative speed vector is large, so that the angle of attack becomes an ideal angle to increase the speed of the blade. Thereby, the rate at which the speed of the blade is increased is further increased. As such, the angle of attack varies depending on the speed of the rotation of the blade of the turbine, the wind speed or the angle of direction of the rotating shaft.

Therefore, in the turbine having the blade of which the angle of incidence is zero, when the tip speed ratio is comparatively high, the speed of the operation of the turbine can be increased to a relatively high speed, but in conditions of a low wind speed and a low speed of rotation, the angle of attack is increased, whereby a lot of time is required to increase the speed of operation.

Furthermore, as the speed of rotation of the rotary body is increased, unlike the initial cut-in stage, infinite wind energy in areas B and D (refer to Fig. 7) is present only as a relative speed vector without creating a resultant vector resulting from the infinite wind speed.

Therefore, the lift effect of the blade is reduced.

Based on such characteristics and principle, the operation principle of the vertical shaft turbine according to the present invention will be explained in more detail.

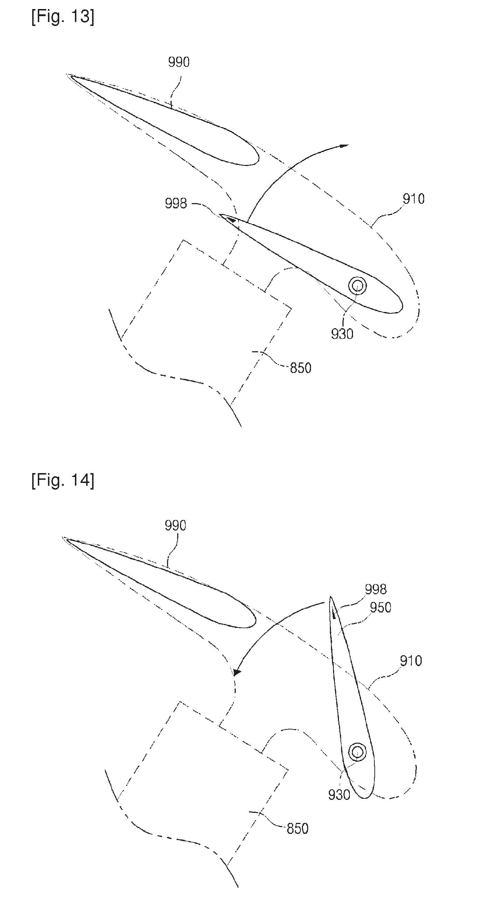

Fig. 13 and 14 are views illustrating the operation principle of the multi-blade unit of the vertical shaft turbine of Figs. 8 through 11c.

When an initial infinite wind speed is comparatively low, in the case of the conventional blade structure of which the angle of incidence is zero, the lift effect is low because the angle of attack is large. Therefore, much time is required to increase the speed of operation. To solve this problem, in the present invention, an appropriate initial angle of incidence is given to the blade so that the angle of attack can be improved.

Referring to Figs. 13 and 14, in the vertical shaft turbine according to the present invention, the first blade 950 and the second blade 990 are provided in the cassette 910 to form a double blade structure. The first blade 950 and the second blade 990 form the multi-blade unit.

In the multi-blade unit, the centrifugal rotating shaft 930 is installed at a geometric aerodynamic center to guide the rotation of the first blade 950 in such a way that the leading edge of the first blade 950 is rotated on the centrifugal rotating shaft 930 by an increase in the speed of the operation, that is, in the centrifugal force, in the direction in which the centrifugal force is applied thereto. The centrifugal force responding device is provided on the first blade 950 to provide rotating force to the first blade 950 in response to the centrifugal force between the initial speed and the rated speed.

A typical known compressible device having a series of mechanical elements that can provide compressive force can be used as the centrifugal force responding device. A compression spring, a compression absorber, a compression damper, a hydraulic device, an electrical device (e.g., an electronic valve, a motor, etc.) and so on are representative examples of the centrifugal force responding device (refer to the elements 970, 970a, 972 and 976 of Figs. 8 through 10c). Furthermore, in an embodiment, the centrifugal force responding device may be embodied using a stress device with permanent magnets (refer to the corresponding elements of Figs. 11a through 11c).

In a broad sense, the centrifugal force responding device may further include a weight 998 which is provided on the trailing end of the first blade 950. The weight 998 moves the center of gravity of the first blade 950 towards the trailing edge of the first blade. Thereby, when the first blade 950 is rotated on its own axis by the operation of the centrifugal force responding device which is formed of a compression spring, a compression damper, a hydraulic device, an electrical device or a stress device with permanent magnets, the rotation of the first blade 950 on its own axis can be carried out more smoothly. The weight 998 can be embodied in such a way that a separate metal member is attached to or disposed in the trailing end of the first blade 950.

The centrifugal force responding device rotates the first blade 950 on its own axis such that when the blade revolves, the angle of attack varies depending on a rotation zone with respect to the wind direction and a revolution speed. According to this construction, the speed increase characteristics can be markedly improved compared to that of the conventional fixed-incidence-angle type turbine.

Furthermore, the stopper or the end stopper (refer to numeral 982 of Fig. 11a) makes the vertical shaft turbine maintain the rated output, rather than entering a stall state or a cut-out speed state, when rotating force by which the first blade 950 is brought into contact with the stopper is generated. In other words, the stopper can be used to control the rated output. Meanwhile, in the case of the typical turbine, because the angle of attack of the blade is a stall angle or zero, a brake must be operated at the cut-out speed that is defined in the typical turbine. However, in the present invention, the angle of attack of the blade can be automatically controlled by the stopper.

In the present invention, in proportion to the rotating force or centrifugal force, the angle of attack of the blade becomes close to zero due to contraction related to the compressive force of the centrifugal force responding device, whereby the lift is reduced and the speed of revolution can be reduced.

Furthermore, the first blade 950 having the above-mentioned characteristics is disposed at the inner side of the cassette 910, and the second blade 990 that is equal to or similar to the first blade 950 is disposed at the outer side of the cassette 910 by the above-defined blade unit setting method. Further, the first and second blades 950 and 990 are configured such that the angle of incidence of the first blade 950 is greater than the angle of incidence of the second blade 990, and the phase of the first blade 950 leads that of the second blade 990 with respect to the direction in which the rotating shaft of the turbine is rotated. Thereby, an average value of the rotation vector by a drag factor can become a positive value.

The effects of the vertical shaft turbine of the present invention having the above-mentioned construction will be explained below.

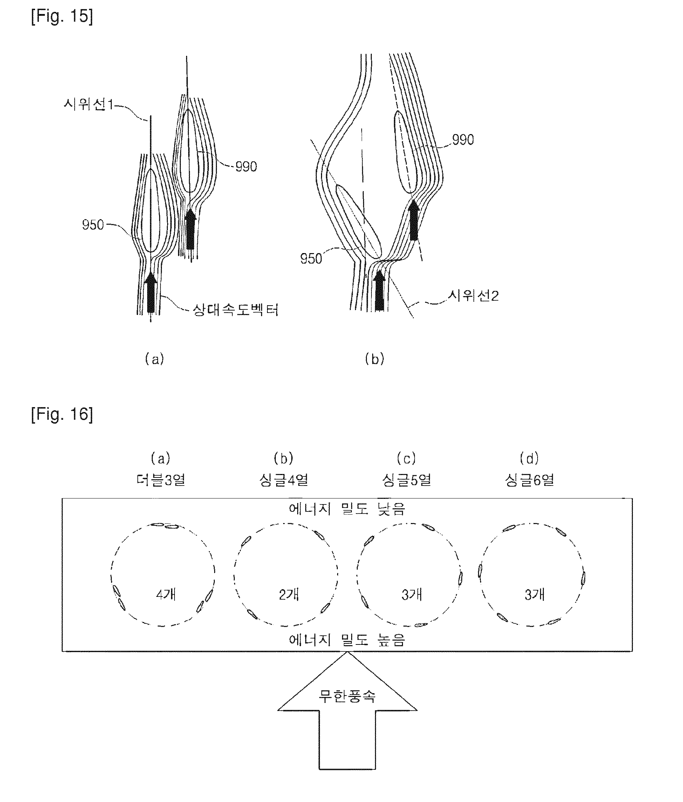

Figs. 15 and 16 are views illustrating the operation and effect of the vertical shaft turbine of Figs. 8 through 11c.

After the speed of the turbine has been sufficiently increased, a phenomenon in which external energy that is infinite wind is blocked by a wind wall formed by an increase in the speed of the turbine and is not transmitted to the area B or D is induced. Thereby, only inertia resulting from rotational torque in area A or C is present in the area B or D, and the angle of attack corresponds to the tangent line of the circle. As a result, the lift is reduced. That is, as shown in (a) of Fig. 15, when the angle of incidence is zero, the lift force is slightly generated. As shown in (b) of Fig. 15, when the angle of incidence is a predetermined angle, for example, 16°, an ideal angle of attack is formed, so that high lift force is generated. Therefore, in the present invention, an induction vector is formed on the second blade (outer blade) 990 by the angle of incidence of the first blade (inner blade) 950, whereby the angle of attack can be improved.

As such, in the multi-blade unit of the present invention, the angle of attack depending on the angle of incidence is increased in the areas B and D, compared to the typical turbine. Therefore, the lift effect can be improved.

Particularly, thanks to the angle of incidence of the first blade 950 that is higher than that of the second blade 990, some wake flow around the trailing edge of the blade unit increases the air flow rate at the angle of attack of the second blade 990, and a phenomenon in which the first and second blades 950 and 990 are generally connected to each other is induced. Therefore, an effective area is increased, whereby general lift effect can be enhanced.

In addition, the reason why the first and second blades 950 and 990 that are respectively disposed at the inner and outer positions have different angles of incidence is to compensate both for the phase of the first blade 950 that leads that of the second blade 990 and for the line speed depending on a radius. Thanks to this, the present invention can achieve the effects both of improvement in the lift effect in the areas B and D and of the rotational torques of the first and second blades 950 and 990 being maximized in the areas A and C, particularly around about 67° and about 292°.

In the present invention, based on the rotating shaft, the first blade 950 and the second blade 990 are oriented substantially not parallel to each other so that depending on the speed of revolution, appropriate variation in the angle of attack can be provided to the blade unit.

Meanwhile, as shown in Fig. 16, a three-row double blade structure is more geometrically formed, in terms of a wind receiving surface in which energy density is high, compared to a six-row single blade structure. Furthermore, unlike other blade structures such as a four- or five-row single blade structure, because some infinite wind is transmitted to the areas B and D, maximum torque points of the turbine are generated at four places. Given this, in the present invention, the multi-blade units are arranged to form the double three-row blade structure.

Of course, the multi-blade unit having the above-mentioned three-row double blade structure is only one embodiment of the present invention. In another embodiment, the multi-blade unit may have a variety of structures, for example, a four-row double blade structure, a three-row triple structure, a four-row triple structure, etc.

The vertical shaft turbine having the multi-blade unit of the present invention has the following advantages, compared to the conventional vertical shaft turbine having the simple double blade structure. The following differences involve differences in the performance and efficiency of the vertical shaft turbine.

1. In terms of the arrangement of the blades, the phase of the inner blade (corresponding to the first blade) leads that of the outer blade (corresponding to the second blade) by a predetermined angle with respect to the direction of revolution around the rotating shaft.

2. The position or radius of the inner blade based on the outer blade is at least the same as the maximum camber.

3. The outer blade and the inner blade have different mechanical angles of incidence in such a way that the angle of incidence of the inner blade is greater than that of the outer blade.

4. The angles of incidence defined by the inner blade and the outer blade differ from each other.

5. Because of different angles of incidence, the vectors of the inner and outer blades differ from each other, so that the angles of attack of them are the same at the same angle of direction.

6. There is no interference portion in any section.

7. When the angle of incidence is zero in the area B or D, the ideal angle of attack is small, but when the angle of incidence is not zero, the angle of attack in the area B or D is improved, whereby the output can be enhanced.

8. The flap function of the inner or outer blade provides a function of controlling the upper limit speed.

9. When two or more blades are combined (to form the multi-blade unit), because the blades are arranged in a direction of a rotation surface of a rotational radius, the effective area of the blades can be increased.

10. In the front and rear blade arrangement, wake flow of the inner blade increases air density at the leading edge of the outer blade. A vector of wake flow separated from some laminar flow improves the angle of attack of the rear outer blade. The air flow that has passed through the front inner blade leads to the laminar flow of the rear outer blade, thus providing an effect of an increase in the entire surface area of the blade unit. Thereby, the lift characteristics can be improved.

11. Thanks to the position and the angle of incidence of the inner blade which is disposed at the front position with respect to the direction of the revolution, in other words, the phase of which leads that of the outer blade, at the initial stage of the revolution, a drag vector is increased so that the performance of the initial cut-in operation and the performance under conditions of low wind speed can be markedly increased.

Meanwhile, the blade is manufactured by extrusion or injection molding to have a predetermined chord line length or width. Here, in the design of the wind power turbine, the chord line length of the blade is an important design factor. A chord line length of a predetermined ratio is an important factor that determines the capacity of the turbine. The maximum capacity of the turbine that is possible to be manufactured can be determined by the chord line length.

In other words, the turbine that can be manufactured with a specific chord line length of the blade that has a predetermined value is limited. Given this, in a further embodiment of the present invention, the blade unit may be configured in such a way that a single blade, the chord line length of which is two or three times that of the typical blade, is arranged along the direction of rotation and has multiple angles of attack.

Next, a bidirectional vertical shaft turbine including the multi-blade unit according to one of the above-mentioned embodiments of the present invention will be described in detail. Prior to the explanation of the bidirectional vertical shaft turbine, factors to be considered when the bidirectional vertical shaft turbine is manufactured will be described.

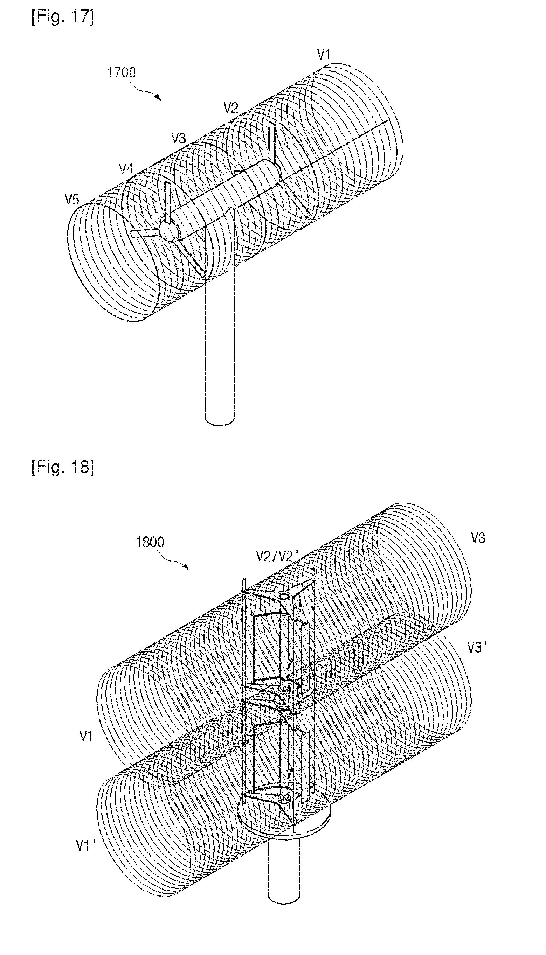

Fig. 17 is a view illustrating a wind power generator according to a comparative example of the present invention. Fig. 18 is a view illustrating a wind power generator according to another comparative example of the present invention.

Methods of inducing electricity in a generator are classified into a method in which a rotor with a coil is fixed and a field magnet is rotated, and a method in which, contrariwise, the field magnet is fixed and the rotor is rotated. Here, the bidirectional vertical shaft turbine uses the principle as follows: the rotor and the field magnet are rotated in the opposite directions so that a relative speed between the conductive coil and a conductor that is in a magnetic field in which magnetic flux is distributed can be doubled, whereby induced electromotive force doubles or more.

For example, as shown in Fig. 17, a bidirectional horizontal shaft generator 1700 is operated in such a way that the total energy of air drawn into an imaginary air flow tube that is defined by blades of the horizontal shaft turbine is primarily converted into electric energy (V2) by a front blade and then energy of wake flow is converted into energy (V4) by a rear blade.

In this bidirectional generator, the front and rear blades primarily and secondarily absorb the energy of inlet wind, that is, share the total energy of the inlet wind. Therefore, eventually, this bidirectional generator produces the same amount of energy as the total energy obtained by a single blade. Thus, in this bidirectional generator, the efficiency cannot be doubled only by rotating the blades in the opposite directions to each other.

For example, when infinite wind is drawn into V1, theoretical maximum of energy that is absorbed by the blades of V2 and V4 is only 59.5% of energy (V1) of the infinite wind according to Betz theory or Betz constant under lossless conditions. A value of V5 becomes 40.7% of V1. That is, V5 = v1 - (59.3%).

Therefore, the energy that is absorbed by V2 and V4 is energy that the blades of V2 and V4 share and absorb the theoretical maximum value (59.3%).

Meanwhile, as shown in Fig. 18, in the bidirectional vertical shaft turbine 1800, infinite wind energies V1 and V1' are applied to respective turbines. Torque generated by the mechanical output of the turbines, each of which has a predetermined area, is transmitted to a rotor and a field magnet as rotational kinetic energy, whereby the output can be increased to double or more.

In other words, energy is independently applied to each of the upper and lower turbines, and the same magnitude of torque is applied from each turbine to the rotor and the field magnet. Therefore, the electric output can be increased to double or more.

This can be expressed as Equations 1 and 2.

$$[\text{Equation 1}]$$
$$V2 = V1 \times 59.3$$

$$[\text{Equation 2}]$$
$$V2' = V1' \times 59.3$$

However, as stated above, when the bidirectional vertical shaft turbine cuts in, current flows through the coil of the rotor, so magnetic flux is generated by the current. The rotor instantaneously enters the same state as a rotor of an electric motor, and force that attracts the opposite field magnet is generated by relative reverse torque. This phenomenon is generally referred to as armature reaction.

Therefore, when the bidirectional generator initially cuts in, if the upper turbine is rotated in a clockwise direction, the lower turbine that is not fixed to a fixing device follows the upper turbine due to the above-mentioned phenomenon. This following phenomenon consecutively occurs in all sections to which wind is applied. As a result, the function of the bidirectional generator cannot be correctly conducted.

Furthermore, when only either the upper turbine or the lower turbine is occasionally rotated around the vertical shaft by force applied thereto, the other turbine must be stationary or be in a wind receiving area in which it can reversely rotate. If not, the efficiency of the bidirectional generator may be lower than that of an independent single turbine generator.

As described above, although the energy generation efficiency of the bidirectional vertical shaft generator is higher than that of the bidirectional horizontal shaft generator, commercialization of the bidirectional vertical shaft generator has been delayed because of the structural problem in realization of bidirectional operation. An embodiment of a high efficiency bidirectional vertical shaft generator using multi-blade units according to the present invention which can be commercialized will be explained in detail below.

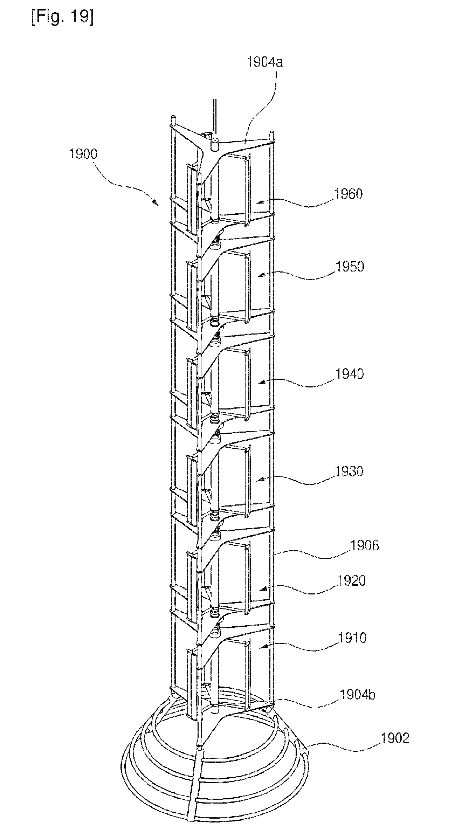

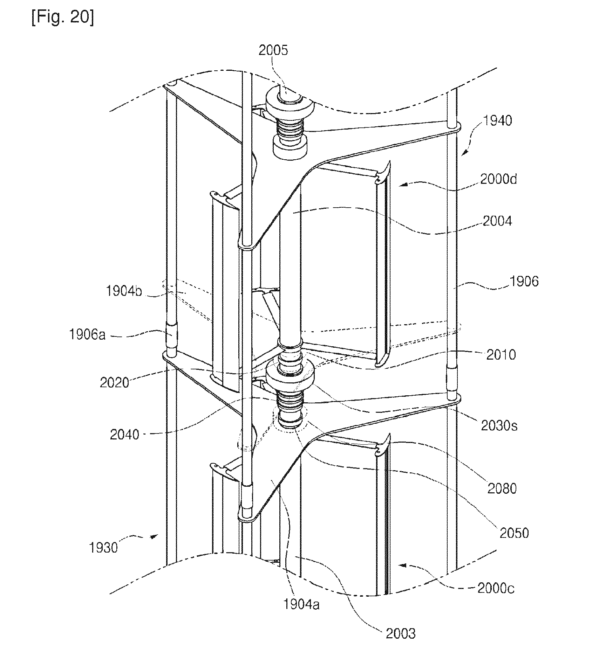

Fig. 19 is a perspective view of a bidirectional stack type vertical shaft turbine including vertical shaft turbines, according to an embodiment of the present invention. Fig. 20 is a partial enlarged perspective view of the bidirectional stack type vertical shaft turbine of Fig. 19.

As shown in Fig. 19, the bidirectional stack type vertical shaft turbine (1900, hereinafter referred to as simply the bidirectional vertical shaft turbine) includes: a plurality of vertical shaft turbines 1910 to 1960, each of which includes a multi-blade unit having a multiple attack angle structure; triangular support plates 1904a and 1904b which are respectively provided on and under each vertical shaft turbine; support rods 1906 which connects the triangular support plates 1904a and 1904b of each vertical shaft turbine to each other; coupling members (see reference numeral 1906a of Fig. 20) which couple the support rods 1906 of each vertical shaft turbine to the corresponding support rods 1906 of the adjacent vertical shaft turbine; and a support base 1902 which support a lower end of the bidirectional vertical shaft turbine. For the sake of brevity, each of the triangular support plate, the support rod, the coupling member and the support base may be simply referred to as a support.

In this embodiment of the present invention, every two of the vertical shaft turbines 1910 to 1960 form a pair to have a structure such that three rows are stacked on top of another in the vertical direction. Hereinafter, a pair of vertical shaft turbines which are basic elements of the bidirectional vertical shaft turbine will be explained.

Each pair of vertical shaft turbines include an upper turbine which rotates in a first direction and is provided with a multi-blade unit, and a lower turbine which rotates in a second direction opposite to the first direction and is provided with a multi-blade unit. In other words, the three bidirectional vertical shaft turbines substantially have the same construction and shape. Therefore, for example, an upper turbine 1940 and a lower turbine 1930 of any one of the three bidirectional vertical shaft turbines will be representatively explained.

A generator is a device which generates induced electromotive force depending on a speed at which magnetic flux is cut by moving a conductor in a magnetic field using external mechanical rotating force while either a rotor or a field magnet is stationary. Factors that determine the output of the generator include a magnetic flux density, an effective length of a conductor and a speed at which the conductor cuts the magnetic flux. Here, the magnetic flux density and the length of the conductor are determined as predetermined values depending on a rating value designed when the generator is produced. The speed at which the conductor rotates to cut the magnetic flux is derived from a variable output of the generator. Unlike a unidirectional generator, the bidirectional generator is operated in such a way that the rotor and the filed magnet are independently rotated in the directions opposite to each other so that the relative speed therebetween can be doubled, thus enhancing the output characteristics of the generator. Given this, the bidirectional vertical shaft turbine according to this embodiment of the present invention is improved in an independent rotation structure of the upper and lower turbines that are respectively coupled to the rotor and the field magnet of the generator. Thereby, the performance and efficiency of the turbine can be enhanced.

This will be explained in more detail with reference to Fig. 20. The bidirectional vertical shaft turbine 1900 includes an upper composite turbine cassette unit 2000d which is coupled to an auxiliary turbine rotating shaft 2004, an upper-turbine lower-bearing housing 2010, an upper one-way clutch and electromagnetic clutch set 2020, a generator module unit 2030, an output slip ring 2040, a lower one-way clutch and electromagnetic clutch set 2050, supports 1904a, 1904b and 1906 and a lower composite turbine cassette unit 2000c which is coupled to another auxiliary turbine rotating shaft 2003. Each of the upper and lower composite turbine cassette units 2000d and 2000d corresponds to the above-mentioned multi-blade unit.

To prevent a phenomenon in which, while the upper turbine 1940 is rotated in a clockwise direction by an upper connection coupling coupled to the rotating shaft that corresponds to the rotor, the lower turbine 1930 which is in a free state, that is, not in a wind receiving area, follows the upper turbine in the same direction because of armature reaction, this embodiment of the present invention has the following construction. Independent of an upper bearing and a lower bearing (upper and lower bears of the lower turbine) that are provided on extension portions of the rotating shaft 2003 of the lower turbine 1930 to make the rotation of the lower turbine 1903 smoother, a one-way clutch is provided on the triangular support plate (the support; 1904a) that supports a rotary body on the upper bearing of the lower turbine 1930. The one-way clutch allows rotation in only one direction and prevents rotation with respect to force applied in the opposite direction.

According to this construction, when the upper turbine 1940 rotates in the clockwise direction, an outer wheel of the one-way clutch is fixed to the support by a bearing of the one-way clutch, and an inner part thereof is connected to the field magnet of the generator. The field magnet of the generator, by the armature reaction, functions to restrict clockwise rotation of the upper turbine 1940 that is the rotor, whereby the field magnet side rotating shaft acts like it is fixed to the support.

Thereafter, when the lower turbine 1930 enters a wind receiving area, because the bearing of the one-way clutch can be rotated in a downwind direction, for example, in the counterclockwise direction, the conventional problem in the cut-in operation of the bidirectional generator can be solved.

In this embodiment, the upper one-way clutch and the lower one-way clutch are integrally installed, along with corresponding electromagnetic clutches, in the upper and lower one-way clutch and electromagnetic clutch set 2020 and 2050. The electromagnetic clutch is a well-known device, so further explanation thereof is deemed unnecessary.

In this embodiment, the upper one-way clutch and electromagnetic clutch set 2020 and the lower one-way clutch and electromagnetic clutch set 2050 are installed between the upper turbine 1940 and the lower turbine 1930. The generator module unit 2030 and the output slip ring 2040 are installed between the upper one-way clutch and electromagnetic clutch set 2020 and the lower one-way clutch and electromagnetic clutch set 2050.

Because of characteristics of the bidirectional generator, the relative speed between the armature and the field magnet is double that of the unidirectional generator. Therefore, in the bidirectional vertical shaft turbine according to this embodiment, it is required for the upper and lower electromagnetic clutches to control the revolution per minute (RPM) within a predetermined RPM range. Furthermore, the present invention may include an electric control program to make it possible to simultaneously or individually operate the upper and lower turbines. That is, each of the upper and lower electromagnetic clutches a function of controlling the upper and lower turbines at the same time, a function of independently controlling only the upper turbine and a function of independently controlling only the lower turbine.

In the upper and lower turbines 1940 and 1930 of this embodiment, although the multi-blade unit can be mechanically controlled without cutting out, each of the upper and lower turbines may include an electrical breaking function as an emergency device for coping with a mechanical problem or breakdown.

As such, according to the above-mentioned embodiment, the present invention can provide a bidirectional stack type vertical shaft turbine in which at least two bidirectional wind generators, each of which has the multi-blade unit, are stacked on top of one another.

The above-stated embodiments of the present invention have the following effects.

1. The present invention can provide a technique related to a composite blade turbine having multiple angles of attack.
2. The present invention can provide a technique of using the multi-blade structure so that an effective cross-sectional area can be increased.
3. The present invention can provide a technique of forming a double incidence angle structure so that the maximum composite lift can be generated at a specific angle.
4. The present invention can provide a technique by which rating power can be maintained in the bidirectional vertical shaft turbine.
5. The present invention can provide a technique related to a high-efficiency turbine stack type system for a vertical shaft wind power generator.
6. The present invention can provide a bidirectional speed control technique for a stack type vertical shaft turbine.
7. The present invention can provide a technique for removably installing a generator in a bidirectional vertical shaft turbine having a multi-blade unit.

Meanwhile, in the above-mentioned embodiments, although a first blade has been illustrated as having a function of being flapped by centrifugal force, the present invention is not limited to the above construction. For example, based on the technical idea explained in the description of this specification, the present invention may be configured such that a second blade, the phase of which follows that of the first blade with respect to the direction of revolution, has the flap function. In this case, the constructions of the first blade and the centrifugal force responding device coupled to the first blade, which have been illustrated in the above embodiments, can be substituted by the constructions of the second blade and the centrifugal force responding device coupled to the second blade, except for the construction of the weight.

Furthermore, in the above-mentioned embodiments, in the case where the multi-blade unit is configured such that the first blade is flapped, although the weight has been illustrated as being provided in the trailing edge of the first blade, the present invention is not limited to this construction. For instance, if the multi-blade unit is configured such that the second blade is flapped, the weight may be provided in the leading edge of the second blade.

Moreover, in the above-mentioned embodiments, although the first blade has been illustrated as being configured such that it can be rotated within a predetermined angular range by centrifugal force to conduct the flap operation, the present invention is not limited to this construction. For example, the multi-blade unit may be configured such that the angles of incidence of the first and second blades are fixed at specific angles, or the angle of incidence of the at least first blade can be changed between at least two values in response to the RPM of the turbine and a rotation zone depending on the direction of wind.

Although the preferred embodiments of the present invention have been disclosed for illustrative purposes, the present invention is not limited to these embodiments, and those skilled in the art will appreciate that various modifications, additions and substitutions are possible, without departing from the scope and spirit of the invention. Therefore, the bounds of the present invention must be defined based on the accompanying claims with reference to the drawings, and all equivalents or equivalent modifications must be regarded as falling within the bounds of the present invention.

**Claims**

1. A vertical shaft turbine, comprising a multi-blade unit, an arm connected to the multi-blade unit, a rotating shaft connected to the arm, and a support supporting the rotating shaft, the multi-blade unit comprising:

   a cassette connected to the arm;
   a centrifugal rotating shaft coupled to the cassette so as to be rotatable;
   a first blade coupled to the centrifugal rotating shaft so as to be rotatable;
   a centrifugal force responding device coupled to the first blade; and
   a second blade coupled to the cassette,
   wherein, when the rotating shaft is rotated, the first blade is rotated around the centrifugal rotating shaft by force transmitted from the centrifugal force responding device in response to centrifugal force.

2. The vertical shaft turbine according to claim 1, further comprising a weight installed in a trailing edge or a leading edge of the first blade.

3. The vertical shaft turbine according to claim 2, wherein a phase of the second blade leads a phase of the first blade with respect to a direction of rotation when the multi-blade unit rotates around the rotating shaft.

4. The vertical shaft turbine according to claim 2, wherein a phase of the first blade leads a phase of the second blade with respect to a direction of rotation when the multi-blade unit rotates around the rotating shaft.

5. The vertical shaft turbine according to claim 1, wherein the centrifugal force responding device comprises a compression spring, a compression damper, a hydraulic device, an electromagnetic valve, a motor, a stress device using a permanent magnet or a combination thereof.

6. The vertical shaft turbine according to claim 1, further comprising
   an end stopper provided in the cassette, the first or second blade or each of the cassette and the first and second blades, the end stopper limiting an angle at which the first or second blade rotates around the centrifugal rotating shaft.

7. The vertical shaft turbine according to claim 1, wherein the first blade or the second blade has a symmetrical shape, an asymmetrical shape, a lift type or a drag type airfoil shape or a combination shape thereof.

8. The vertical shaft turbine according to claim 1, wherein when a phase of the first blade leads a phase of the second blade with respect to a direction of rotation around the rotating shaft, an initial angle of incidence of the first blade is larger than an initial angle of incidence of the second blade.

9. The vertical shaft turbine according to claim 8, wherein the angle of incidence of the first blade is fixed at at least two predetermined angles.

10. The vertical shaft turbine according to claim 8, wherein the initial angle of incidence of the first blade is larger than a maximum camber of the second blade.

11. The vertical shaft turbine according to claim 10, wherein a radius of rotation of the first blade around the rotating shaft is less than a radius of rotation of the second blade.

12. The vertical shaft turbine according to claim 1, wherein the multi-blade unit comprises multi-blade units coupled to the rotating shaft in a regular interval arrangement of any one of three, four, five and six rows.

13. The vertical shaft turbine according to claim 1, wherein a distance that the first blade leads the second blade is 2% or more of a length of a chord line of the second blade.

14. The vertical shaft turbine according to claim 1, wherein a difference between a distance between the first blade and the rotating shaft and a distance between the second blade and the rotating shaft is greater than a maximum camber of the first or second blade.

15. A bidirectional stack type vertical shaft turbine comprising
    a first bidirectional vertical shaft turbine comprising a first vertical shaft turbine rotating in a first direction, and a second vertical shaft turbine rotating in a second direction opposite to the first direction, each of the first and second vertical shaft turbine comprising the vertical shaft turbine according to any one of claims 1 through 14.

**16.** The bidirectional stack type vertical shaft turbine according to claim 15, further comprising
a second bidirectional vertical shaft turbine comprising a third vertical shaft turbine rotating in the first direction, and a fourth vertical shaft turbine rotating in the second direction, each of the third and fourth vertical shaft turbines comprising the vertical shaft turbine according to any one of claims 1 through 14, wherein the first and second bidirectional vertical shaft turbines are configured such that the first, second, third and fourth vertical shaft turbines are vertically stacked on top of another in a sequence from bottom to top.

**17.** The bidirectional stack type vertical shaft turbine according to claim 15, further comprising:

an upper one-way clutch and electromagnetic clutch set provided between the rotating shafts of the first and second vertical shaft turbines at a position adjacent to the first vertical shaft turbine; and
a lower one-way clutch and electromagnetic clutch set provided between the rotating shafts at a position adjacent to the second vertical shaft turbine.

**18.** The bidirectional stack type vertical shaft turbine according to claim 17, further comprising:

a generator module unit provided between the upper and lower one-way clutch and electromagnetic clutch sets; and
an output slip ring provided between the generator module unit and the upper or lower one-way clutch and electromagnetic clutch set.

**19.** The bidirectional stack type vertical shaft turbine according to claim 15, wherein the multi-blade unit provided in each of the first vertical shaft turbine and the second vertical shaft turbine is configured such that the first or second blade has a shape inclined at a predetermined angle in a direction of rotation of the first or second blade or in a direction opposite to the direction of the rotation, or has a continuously curved shape, or a shape inclined at a predetermined angle in a direction in which centrifugal force is applied thereto or in a direction towards the rotating shaft opposite to the direction of the application of the centrifugal force.

[Fig. 1]

(a)

(b)

(c)

(d)

[Fig. 2]

(a)

(a)

[Fig. 3]

상대속도
붙입각
받음각
바람속도
합성속도
시위선(Chord Line)
200
150

[Fig. 4]

180°
A 감소 증가 B
무한풍속
90° 270°
내측양력 최대
외측양력 최대
C 증가 감소 D
0°

[Fig. 5a]

501
외측상대속도
무한풍속
내측상대속도
유한풍속
외측합성속도
내측합성속도
502

[Fig. 5b]

501

외측상대속도
내측상대속도

유한풍속

외측합성속도
내측합성속도

502

[Fig. 6]

501

502

[Fig. 7]

무한풍속="미소량"

502

501

B,D지역

상대속도벡터

[Fig. 8]

800

900

850

810

830

[Fig. 9]

[Fig. 10a]

EP 2 623 774 A2

[Fig. 10b]

[Fig. 10c]

22

[Fig. 11a]

[Fig. 11b]

[Fig. 11c]

[Fig. 12a]

[Fig. 12b]

(a)

(b)

[Fig. 13]

[Fig. 14]

[Fig. 15]

시위선1

990

950

상대속도벡터

990

950

시위선2

(a)

(b)

[Fig. 16]

(a)
더블3열

(b)
싱글4열

(c)
싱글5열

(d)
싱글6열

에너지 밀도 낮음

4개

2개

3개

3개

에너지 밀도 높음

무한풍속

[Fig. 17]

[Fig. 18]

[Fig. 19]

[Fig. 20]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Aerodynamic study for designing small vertical shaft turbine. The Korean Society for New and Renewable Energy, 2007